# EUROPÄISCHE PATENTSCHRIFT

(11) **EP 1 744 636 B1**
(45) Veröffentlichungstag und Bekanntmachung des Hinweises auf die Patenterteilung: **27.02.2008**
(21) Anmeldenummer: 04803691.7
(22) Anmeldetag: 09.12.2004
(51) Int. Cl.: A22C 11/02, A22C 11/12

(54) **WURSTVERPACKUNGSVORRICHTUNG ZUM BEFÜLLEN VON PASTÖSEM FÜLLGUT IN SCHLAUCHFÖRMIGES HÜLLENMATERIAL**
SAUSAGE PACKAGING APPARATUS FOR FILLING PASTY STUFFING MATERIAL INTO TUBULAR CASING MATERIAL
DISPOSITIF D'EMBALLAGE DE SAUCISSE SERVANT A REMPLIR UNE ENVELOPPE TUBULAIRE D'UNE MATIERE DE REMPLISSAGE PATEUSE

(30) Priorität: 13.05.2004 DE 202004007711 U
(43) Veröffentlichungstag der Anmeldung: 24.01.2007
(73) Patentinhaber: Tipper Tie technopack GmbH, 21509 Glinde (DE)
(72) Erfinder: JÄCKEL, Gunnar, 21271 Asendorf (DE)
(74) Vertreter: Glawe, Delfs, Moll
(86) Internationale Anmeldenummer: PCT/EP2004/014036
(87) Internationale Veröffentlichungsnummer: WO 2005/115153

(56) Entgegenhaltungen:
- EP-A- 0 399 195
- EP-A- 0 507 374
- US-A- 5 890 955
- US-A1- 2003 073 397

## Beschreibung

Die Erfindung betrifft eine Wurstverpackungsvorrichtung zum Befüllen von pastösem Füllgut in schlauchförmiges Hüllenmaterial mit einem Füllrohr, das an einer Füllzone mündet und an seiner Außenseite eine Aufnahme für gerafftes schlauchförmiges Hüllenmaterial aufweist. Die Wurstverpackungsvorrichtung ist so ausgebildet, dass zum Füllen einer Wurst das einseitig verschlossene Hüllenmaterial unter dem Druck des Füllguts von dem Füllrohr abgezogen wird und bei Erreichen einer bestimmten Größe mittels einer Verschlusseinrichtung verschlossen wird. Zum Abführen der so gefüllten und verschlossenen Wurst ist ein Laufband vorgesehen. Eine derartige Vorrichtung ist aus beispielsweise US-2003/0073397 A1 bekannt.

Gattungsgemäße Wurstverpackungsvorrichtungen sind aus offenkundiger Vorbenutzung bekannt. Sie weisen als Hauptkomponenten eine Fülleinrichtung, eine Verschließvorrichtung für das Hüllenmaterial und eine Abfuhreinrichtung für die so hergestellten Würste auf. Die Verschließeinrichtung umfasst Elemente zum Einschnüren des mit Füllgut gefüllten Strangs am Wurstende und, wenn gewünscht, Setzen von Verschlussclips. Dies geschieht, indem das Füllgut, man spricht hier in der Regel von Wurstbrät, der Verpackungsvorrichtung aus einem vorgelagerten Verarbeitungsprozess zugeführt wird. Das Wurstbrät strömt unter Druck durch das Füllrohr in einen einseitig geschlossenen Schlauch aus Hüllenmaterial. Das Hüllenmaterial ist auf dem Füllrohr in einem gerafften Vorrat angeordnet. Durch den Druck im Füllrohr wird das Wurstbrät gleichmäßig in den Schlauch aus Hüllenmaterial gestopft, wobei weiteres Hüllenmaterial gegen eine Bremskraft vom Vorrat abgezogen wird. Ist eine gewünschte Länge erreicht, wird der Schlauch aus Hüllenmaterial eingeschnürt und verschlossen, gegebenenfalls auch durchtrennt. Damit ist eine Wurst hergestellt. Sie wird über die Abfuhreinrichtung zur weiteren Bearbeitung abtransportiert. Als Abfuhreinrichtungen werden meist Rutschen oder Laufbänder verwendet. Obgleich damit ein zuverlässiger Abtransport sowohl von Einzelwürsten wie auch von ganzen Wurstketten ermöglicht ist, so ergeben sich doch Schwierigkeiten bei Würsten mit größerem Kaliber. Durch ihr hohes Gewicht liegen sie schwer auf der Abfuhreinrichtung auf. Bei einem Laufband entstehen so noch während des Füllvorgangs große Reibkräfte, welche die Wurst aus der Füllzone wegzuziehen suchen, beim Rutschen bewirkt die Hangabtriebskraft Ähnliches. Dadurch wirkt nicht nur die Druckkraft des austretenden Wurstbräts, sondern zusätzlich noch die Reibkräfte auf das Hüllenmaterial. Ein ungleichmäßiges Abziehen ist die Folge. Die Stopfqualität und das Kaliber der so hergestellten Würste verringern sich.

Der Erfindung liegt die Aufgabe zugrunde, eine Vorrichtung der eingangs genannten Art derart zu verbessern, dass die oben genannten Nachteile insbesondere beim Befüllen großer Würste verringert sind.

Die Lösung gemäß der Erfindung liegt in den Merkmalen des unabhängigen Anspruchs. Vorteilhafte Weiterbildungen sind Gegenstand der abhängigen Ansprüche.

Erfindungsgemäß ist bei einer Wurstverpackungsvorrichtung zum Befüllen von pastösem Füllgut in schlauchförmiges Hüllenmaterial mit einem Füllrohr, das an einer Füllzone mündet und an seiner Außenseite eine Aufnahme für gerafftes schlauchförmiges Hüllenmaterial aufweist, so dass zum Füllen einer Wurst das einseitig verschlossene Hüllenmaterial unter dem Druck des Füllguts von dem Füllrohr abgezogen wird und bei Erreichen einer bestimmten Größe mittels einer Verschlusseinrichtung verschlossen wird, und mit einer ein Laufband umfassenden Abfuhreinrichtung für die so gefüllte Wurst vorgesehen, dass das Laufband mit einem drehzahlstellbaren Antrieb versehen ist, dessen Geschwindigkeit von einem Regelmodul einer Steuereinheit einstellbar ist, und dass eine Wachstumsmesseinrichtung für die Wurst vorgesehen ist, die an der Füllzone angeordnete Geschwindigkeitsmessmittel, eine Auswerteeinheit zur Bestimmung einer Wachstumsgeschwindigkeit der Wurst und eine Synchronisiereinheit aufweist, welche das Regelmodul so ansteuert, dass ein Gleichlauf zwischen Geschwindigkeit des Laufbands und der Wachstumsgeschwindigkeit erreicht ist.

Nachfolgend sollen einige verwendete Begriffe erläutert werden:

Unter einer Füllzone wird der Bereich der Wurstverpackungsmaschine verstanden; in dem das Hüllenmaterial mit Füllgut, insbesondere Wurstbrät, befüllt und verschlossen wird.

Unter Verschließen wird vorliegend verstanden, dass das Hüllenmaterial so zusammengehalten ist, dass kein Füllgut unbeabsichtigt an den Enden austritt. Als Verschließarten kommen insbesondere Setzen von Verschlussclips oder Abdrehen des Hüllenmaterials in Betracht.

Unter einem drehzahlstellbaren Antrieb wird verstanden, dass der Antrieb wie ein Servomotor eine bestimmte Drehzahl einregelt.

Unter Gleichlauf wird verstanden, dass kein stationärer Geschwindigkeitsunterschied besteht bzw. vorzugsweise unter einer Toleranz von einem Zehntel der Wachstumsgeschwindigkeit bleibt.

Unter Wachstum der Wurst wird die Rate verstanden, mit der sich der einseitig geschlossene Schlauch aus Hüllenmaterial vergrößert.

Die Erfindung beruht auf dem Gedanken, die Geschwindigkeit des Laufbands in Abhängigkeit von der Wachstumsgeschwindigkeit der Wurst zu regeln. Dies ermöglicht es, die Bewegung der Abfuhreinrichtung in Gestalt des Laufbands an das Wachstum der Wurst anzupassen. Das geschieht aktiv, d. h. das Laufband richtet sich in seiner Geschwindigkeit linear nach der des Füllvorgangs. Überlastungen des Hüllenmaterials durch zu frühes Wegziehen der Wurst bzw. durch zu früh und/oder zu stark ansteigende wegziehende Kräfte können auf diese Weise sicher vermieden werden. Gegenüber dem Stand der Technik, bei dem die wegziehende Kraft mit dem Gewicht der Wurst ansteigt, ergeben sich beachtliche Vorteile. Bekanntlich steigt das Gewicht eines Körpers mit der dritten Potenz der Abmessungen (z. B. Durchmesser) an. Dementsprechend steigen bei konstantem Reibkoeffizient auch die wegziehenden Kräfte mit steigendem Kaliber der Wurst überproportional an, die vom Hüllenmaterial im Bereich der Mündung des Füllrohrs aufgenommen werden müssen. Dieses kann aber nur eine begrenzte Zugspannung aufnehmen, so dass ab einer kritischen Größe das Hüllenmaterial überlastet ist. Dank der Erfindung ist diese störende überproportionale Abhängigkeit beseitigt, die wegziehenden Kräfte werden aktiv dem Wachstum der Wurst nachgeführt. Damit verbessert sich die Stopfqualität, die bisher bei steigendem Füllungsgrad der Wurst in unerwünschter Weise abnahm, je länger die Wurst wurde. Das Kaliber bleibt auch bei sehr schweren, großen und langen Würsten konstant. Die Gleichmäßigkeit und damit auch die Qualität verbessern sich. Außerdem ergibt sich wegen der verringerten Kräfte ein höherer Schutz gegenüber einem Reißen des Hüllenmaterials. Damit ergibt sich zusätzlich eine höhere Betriebssicherheit der erfindungsgemäßen Vorrichtung. Auf Grund der erfindungsgemäß verbesserten Gleichmäßigkeit und Sicherheit erhöht sich das Potential für Produktivitätssteigerungen.

Vorzugsweise sind die Geschwindigkeitsmessmittel als Lichtschranken ausgebildet. Damit wird eine einfache und kostengünstige sowie berührungsfreie Messung des Wachstums der Wurst ermöglicht. Sie sind verschleißfrei und betriebssicher. Zweckmäßigerweise ist mindestens eine von ihnen verstellbar in ihrem Abstand zur Mündung des Füllrohrs angeordnet. Dadurch wird erreicht, dass die Positionierung der Lichtschranken auf einfache Weise an verschiedene Längen der herzustellenden Würste angepasst werden kann. Bei kurzen und dicken Würsten, bei denen es auf eine möglichst schnelle Erfassung der Wachstumsgeschwindigkeit ankommt, ist die Strecke zwischen den Lichtschranken kurz gewählt; bei langen und dünnen Würsten kann die Strecke lang gewählt sein, um die Messgenauigkeit zu erhöhen. Die Verstellung kann manuell erfolgen, mit Vorteil ist aber eine Servoeinrichtung vorgesehen, die von der Steuereinheit betätigt ist. Damit ist es ermöglicht, ohne zusätzlichen Eingriff die Lichtschranken mittels der Steuereinheit der Vorrichtung passend zu positionieren. Insbesondere dann, wenn in die Steuereinheit verschiedene Profile für unterschiedliche Würste bzw. Wurstgrößen eingespeichert sind, ermöglicht dies einen einfachen und sicheren Wechsel zwischen verschiedenen herzustellenden Würsten.

Bei einer bewährten Ausführungsform sind die Lichtschranken in einen Zeilensensor integriert. Das ermöglicht eine feine Auflösung der Messung. Man erreicht so eine genauere Erfassung des Wachstums, so dass das Laufband entsprechend genauer in seiner Geschwindigkeit geregelt werden kann. Außerdem bietet ein solcher Zeilensensor den Vorteil, nicht nur an einer Stelle, sondern über eine gewisse Strecke zu messen. Ist der Zeilensensor groß genug dimensioniert, so können unterschiedliche Wurstgrößen auch ohne Verstellung des Zeilensensors erfasst werden. Eine Servoeinrichtung zur Verstellung ist dann nicht mehr erforderlich.

Mit Vorteil sind die Lichtschranken als Doppelsensoren ausgeführt, die zusätzlich das Kaliber der Wurst erfassen. Damit können weitere Funktionen zur Überwachung des Füllvorgangs einbezogen werden. Gesonderte Fühler, die häufig noch im Stand der Technik mechanisch realisiert sind, werden damit entbehrlich.

Während die Messung über Lichtschranken den Vorteil einer einfachen und störsicheren Technik hat, soll es aber nicht ausgeschlossen sein, die Geschwindigkeit direkt zu erfassen. Insbesondere kommen auch Dopplersensoren in Radar- oder Ultraschalltechnik in Betracht.

Vorzugsweise ist die Steuereinheit mit einem Freiraumerkenner versehen. Dadurch verbessert sich die Erkennungssicherheit bei der Herstellung von verketteten Würsten (Wurstketten). Unter Freiraum wird hierbei der eingeschnürte Bereich der Wurstketten verstanden, der sich zwischen zwei benachbarten Würsten der Kette befindet und nicht mit Wurstbrät gefüllt ist.

Die Abfuhreinrichtung umfasst zweckmäßigerweise ein Förderband, das im Abwurfbereich des Laufbands beginnt und mit einer vom Laufband unabhängigen Geschwindigkeit betrieben ist. Damit kann der Weitertransport der Würste zur nachfolgenden Verarbeitung unabhängig von der Wachstumsgeschwindigkeit der Würste beim Befüllen durchgeführt werden. Es wird damit eine Entkopplung der Geschwindigkeit der nachfolgenden Bearbeitung von der Geschwindigkeit des Verpackungsvorgangs erreicht. Zur Erreichung dieses Vorteils ist es nicht zwingend erforderlich, ein Förderband vorzusehen, eine geneigte Förderrutsche kann ebenfalls vorgesehen sein.

Die Erfindung wird nachfolgend unter Bezugnahme auf die Zeichnung näher erläutert, in der ein vorteilhaftes Ausführungsbeispiel dargestellt ist. Es zeigen:
- Fig. 1: eine schematische Darstellung eines ersten Ausführungsbeispiels der erfindungsgemäßen Vorrichtung;
- Fig. 2: eine schematische Darstellung eines zweiten Ausführungsbeispiels der erfindungsgemäßen Vorrichtung; und
- Fig. 3: eine Darstellung einer Sensoranordnung.

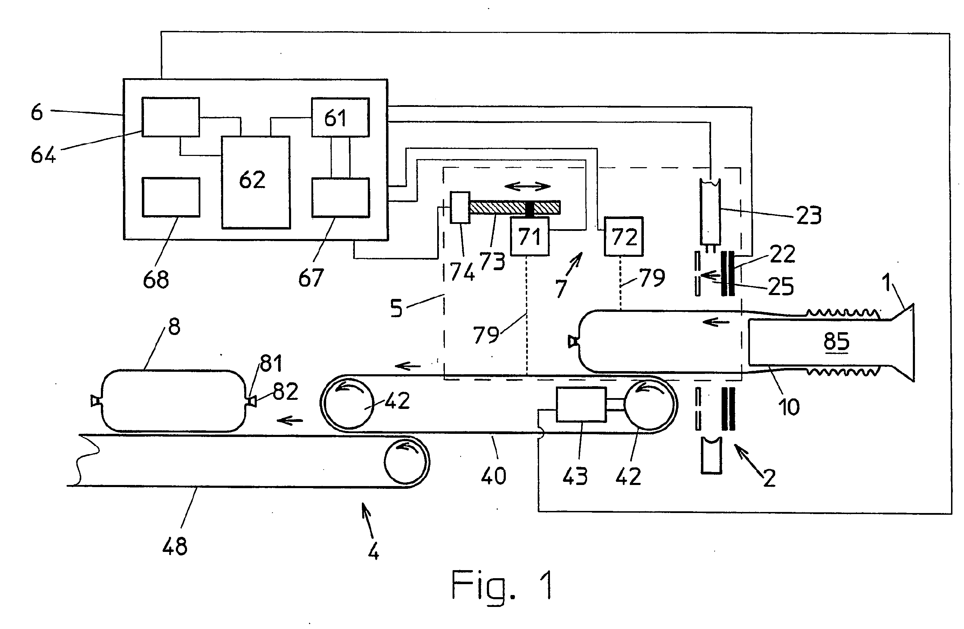

In Fig. 1 ist ein erstes Ausführungsbeispiel einer erfindungsgemäßen Wurstverpackungsvorrichtung schematisch dargestellt. Sie umfasst ein Füllrohr 1, eine kurz hinter einer Mündung 10 des Füllrohrs 1 angeordnete Verschließeinrichtung 2, Geschwindigkeitsmessmittel 7, eine Steuereinrichtung 6 und eine Abfuhreinrichtung 4. Zwischen ihnen ist eine Füllzone 5 gebildet. Auf dem Füllrohr 1 ist ein Vorrat an schlauchförmiges Hüllenmaterial 80 gerafft angeordnet. Zur Steuerung der einzelnen Einrichtungen ist eine Steuereinheit 6 vorgesehen. Die Arbeitsrichtung der Vorrichtung läuft in der Darstellung in Fig. 1 von rechts nach links.

Der generelle Aufbau einer solchen Wurstverpackungsmaschine ist aus dem Stand der Technik bekannt und braucht hier nicht näher beschrieben zu werden. Zum leichteren Verständnis sei kurz die Funktionsweise beschrieben. Von einer Vorverarbeitungsstufe (nicht dargestellt) wird als Wurst zu verpackendes Füllgut (Wurstbrät 85) einem Füllrohr 1 an dessen vorderem Ende (in der Darstellung in Fig. 1 rechts) mit einem gewissen Überdruck zugeführt. Das Wurstbrät 85 strömt unter Druck durch das Füllrohr 1 und tritt an seiner Mündung 10 (in Fig. 1 links) in das schlauchförmige Hüllenmaterial 80. Das Hüllenmaterial 80 ist einseitig mittels eines Verschlussclips 81 verschlossen. Unter der Wirkung des Drucks wird das Wurstbrät 85 in das Hüllenmaterial 80 gestopft, wobei kontinuierlich Hüllenmaterial 80 von dem gerafften Vorrat abgezogen wird. Die Länge des mit Wurstbrät 85 gefüllten Abschnitts des Hüllenmaterials 80 wächst an, bis eine vorbestimmte Länge erreicht ist. Dann wird die Verschließeinrichtung 2 von der Steuereinheit 6 betätigt. Sie umfasst eine Einschnüreinrichtung 22 und eine Clipseinrichtung 23. Die Einschnüreinrichtung 22 umfasst mit einem Paar Verdrängerscheren den aus dem gefüllten Hüllenmaterial 80 gebildeten Strang und drückt ihn soweit zusammen, dass er praktisch brätfrei ist. Eine der Verdrängerscheren wird nach hinten von der Mündung 10 weg gespreizt (siehe Pfeil 25), so dass ein brätfreier Zopf 82 gebildet ist. Zwischen die gespreizten Verdrängerscheren der Einschnüreinrichtung 22 wird die Clipseinrichtung 23 bewegt. Sie ist dazu ausgebildet, je einen Clips 81 an jedes Ende des Zopfs 82 zu setzen. Damit entsteht eine Wurst 8 und der Vorgang beginnt von neuem für die nächste Wurst. Auf diese Weise können kettenartig verbundene Würste 8 hergestellt werden; zur Vereinzelung der Würste 8 kann noch eine Trenneinrichtung (nicht dargestellt) vorgesehen sein, die den Zopf 82 zwischen den beiden Clips 81 durchschneidet.

In Arbeitsrichtung gesehen hinter der Verschließeinrichtung ist ein Laufband 4 gemäß der Erfindung angeordnet. Es ist um zwei quer zur Arbeitsrichtung angeordnete Lagerwalzen 42 geführt, von denen eine mit einem bürstenlosen Synchronmotor als drehzahlstellbaren Antrieb 43 verbunden ist. Der drehzahlstellbare Antrieb 43 ist mit einer Regeleinheit 64 in der Steuereinheit 6 verbunden. Die Regeleinheit 64 ist als Stromrichter ausgebildet und regelt präzise über die Drehzahl des Antriebs 43 die Geschwindigkeit des Laufbands 40.

Am hinteren Ende des Laufbands 40 ist ein Förderband 48 als ein weiteres Element der Abfuhreinrichtung 4 angeordnet. Es ist mit einem eigenen Antrieb (nicht dargestellt) versehen, der das Förderband 48 mit einer höheren Geschwindigkeit als das Laufband 40 antreibt. Das Förderband 48 ist unterhalb des Endes des Laufbands 40 angeordnet und nimmt die dort abgeworfenen Würste 8 auf und transportiert sie zur Weiterverarbeitung.

Oberhalb des Laufbands 40 sind im Bereich der Füllzone 5 zwei Lichtschranken 71, 72 in einem vorbestimmten Abstand als die Geschwindigkeitsmessmittel 7 angeordnet. Sie sind so angeordnet, dass die Wurst 8 beim Befüllen zuerst einen Lichtstrahl der füllrohrnäheren Lichtschranke 72 unterbricht und im weiteren Verlauf des Füllungsvorgangs auch einen Lichtstrahl der füllrohrferneren Lichtschranke 71. Beide Lichtschranken 71, 72 sind mit einer Auswerteeinheit 61 verbunden. Sie ermittelt aus dem vorbestimmten Abstand der beiden Lichtschranken 71, 72 und der Zeit, die zwischen der Unterbrechung der beiden Lichtstrahlen der Lichtschranken 71, 72 verstrichen ist, eine Wachstumsgeschwindigkeit der Wurst 8 als ein Ausgangssignal.

Dieses Ausgangssignal ist angelegt an einen ersten Eingang einer Synchronisiereinheit 62. Die Synchronisiereinheit 62 ist dazu ausgebildet, aus der an einem zweiten Eingang angelegten Drehzahl des Antriebs 43 die Geschwindigkeit des Laufbands 40 zu ermitteln. Die Synchronisiereinheit 62 ist mit einem Komparator versehen und ermittelt eine Differenzgeschwindigkeit und vergleicht sie mit einem einstellbaren Sollwert. Er kann Null betragen oder einen positiven Wert haben (d. h. das Laufband 40 ist etwas schneller als die Wachstumsgeschwindigkeit). In Abhängigkeit von dieser Differenz wird eine neue Drehzahl für den Antrieb 43 eingestellt. Damit kann ein Gleichlauf erreicht werden, d. h. das Laufband 40 läuft genauso schnell, wie die Wurst 8 unter dem Druck des in das Hüllenmaterial 80 einströmenden Wurstbräts 85 wächst. Das Hüllenmaterial 80 wird mit gleichmäßiger Kraft abgezogen. Damit beeinflusst das Gewicht der Wurst nicht mehr die Stopfqualität. Auch sehr große und schwere Würste werden gleichmäßig gestopft. Das Kaliber bleibt über die ganze Länge der Wurst konstant. Außerdem wird ein Überlasten des Hüllenmaterials 80 durch zu große Zugspannungen auf Grund zu hoher Geschwindigkeit des Laufbands 40 sicher vermieden. Der Gefahr von Rissbildung oder Platzen wird damit wirksam entgegengewirkt. Damit ist Verarbeitungssicherheit bei Würsten 8 mit großem Kaliber deutlich verbessert. In bestimmten Fällen, vor allem bei etwa mittelgroßen Würsten 8 kann es erwünscht sein, zur Erhöhung der Stopfgeschwindigkeit das Laufband 40 mit einer etwas größeren Geschwindigkeit als die Wachstumsgeschwindigkeit zu bewegen. Das kann erreicht werden, indem die Differenz auf einen entsprechenden Wert eingestellt wird.

Zur Anpassung an Würste 8 unterschiedlicher Größe ist die füllrohrferne Lichtschranke 71 längsverstellbar an einer Spindeleinrichtung 73 geführt. Durch Verdrehen der Spindeleinrichtung 73 kann der Abstand zwischen den Lichtschranken 71, 72 variiert werden. Damit ändert sich die Messstrecke für die Ermittlung der Wachstumsgeschwindigkeit, um so eine Anpassung an unterschiedliche Längen der herzustellenden Würste 8 vornehmen zu können. Die Spindeleinrichtung ist betätigt durch einen Servoantrieb 74, der von der Auswerteeinheit 67 angesteuert ist. Dadurch kann eine automatische Anpassung an der Länge der Messstrecke an die jeweils hergestellten Würste erreicht werden. Die Messgenauigkeit und - geschwindigkeit kann somit sowohl bei kurzen wie bei langen Würsten nach Bedarf gewählt sein.

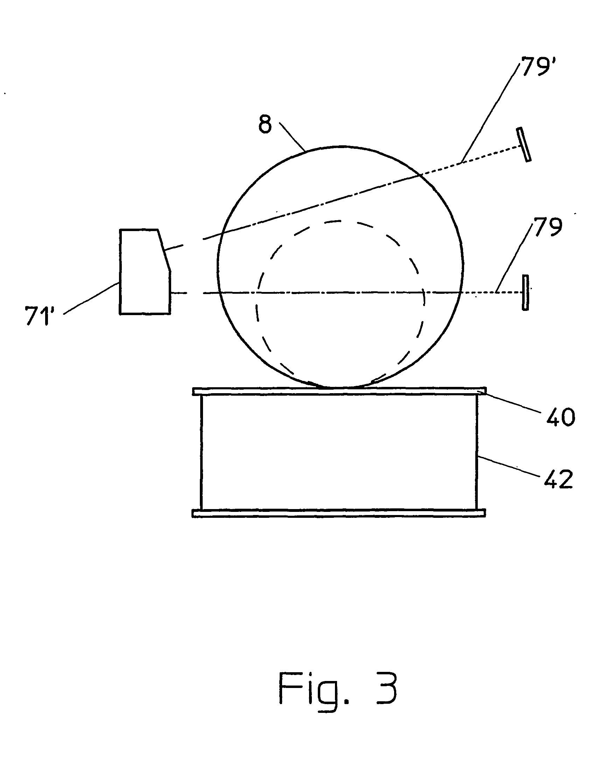

Bei der in Fig. 3 dargestellten Ausführungsform sind die Lichtschranken (nur eine ist dargestellt) als Doppelsensoren 71' ausgebildet und nicht oberhalb des Laufbands 40, sondern seitlich der Füllzone 5 angeordnet. Sie senden zwei divergierende Lichtstrahlen 79, 79' aus. Einer der beiden Lichtstrahlen 79 ist so ausgerichtet, dass er auch bei geringem Kaliber der Wurst 8 unterbrochen ist. Der andere 79' ist nach oben gerichtet und nur dann unterbrochen, wenn eine Wurst 8 mit großem Kaliber auf dem Laufband 40 liegt. Mit dem Doppelsensor 71' kann auf diese Weise nicht nur die Länge, sondern zusätzlich noch eine Information über den Durchmesser der Wurst 8 erfasst werden. Dies kann außer zur Qualitätsüberwachung zweckmäßigerweise vor allem zur Erkennung von Zwischenräumen zwischen Würsten 8 einer Wurstkette 88 verwendet werden.

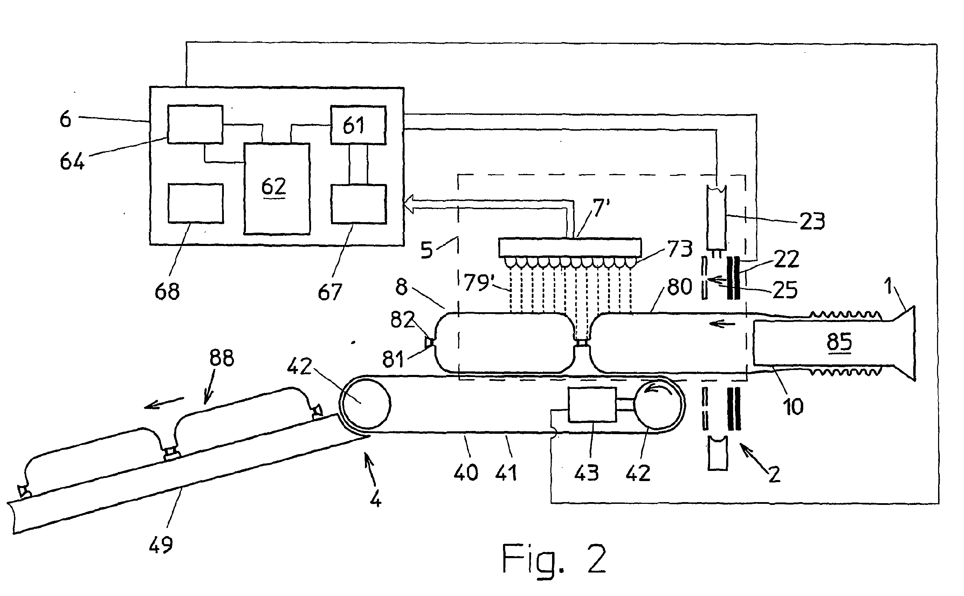

In Fig. 2 ist ein zweites Ausführungsbeispiel der erfindungsgemäßen Wurstverarbeitungsvorrichtung dargestellt. Es entspricht in seinem grundsätzlichen Aufbau dem in Fig. 1 dargestellten ersten Ausführungsbeispiel. Gleichartige Komponenten tragen dieselben Bezugsziffern. Insoweit kann auf eine nähere Beschreibung verzichtet werden. Nachfolgend werden die Unterschiede erläutert.

Anstelle der Lichtschranken 71, 72 als Geschwindigkeitsmessmittel 7 ist bei dem zweiten Ausführungsbeispiel ein Zeilensensor 7' vorgesehen. Er umfasst eine Vielzahl von in Reihe angeordneten Lichtschrankeneinheiten 73. Er erstreckt sich über nahezu die halbe Länge der Füllzone 5 und ist vorzugsweise etwas länger als die herzustellenden. Würste 8. Es können auch mehrere Zeilensensoren 7' in Reihe angeordnet sein. Er ist so angeordnet, dass die von den einzelnen Lichtschrankeneinheiten 73 ausgesendeten Lichtstrahlen von dem mit Wurstbrät 85 gefülltem Hüllenmaterial 80 der Wurst 8 unterbrochen werden, nicht aber von dem zu einem füllgutfreien Zopf 82 zusammengeschnürten Hüllenmaterial 80. Durch die Vielzahl der Lichtschrankeneinheiten 73 kann das Wachstum der Wurst 8 beim Füllen mit Wurstbrät 85 fein aufgelöst gemessen werden. Die Bestimmung der Wachstumsgeschwindigkeit kann auch schneller erfolgen, nämlich sowie die das vordere Ende der Wurst 8 zumindest die zweite der Lichtschrankeneinheiten erreicht hat. Insgesamt ergibt sich somit eine bessere Messqualität, und zwar sowohl hinsichtlich Messgenauigkeit wie Messgeschwindigkeit. Der Zeilensensor 7' ist über eine zur Übertragung von Mehrfachsignalen ausgebildete Busleitung mit der Auswerteeinheit 67 verbunden.

Die feine Auflösung des Zeilensensors 7' ermöglicht eine Erkennung des Zwischenraums bei Wurstketten 88. Damit kann zusätzlich die Gleichmäßigkeit der einzelnen Würste 8 der Wurstkette 88 überwacht werden und ggf. die Geschwindigkeit des Laufbands 40 angepasst werden. Das ermöglicht eine weitere Verbesserung der Produktionsqualität.

Die Abfuhreinrichtung 4 umfasst am Ende des Laufbands 40 eine Rutsche 49. Sie ist nach unten geneigt angeordnet, so dass die von dem Laufband 40 abgeworfenen Würste 8 auf ihr durch Schwerkraft zur Weiterverarbeitung abtransportiert werden. Das ist insbesondere für die Herstellung von Wurstketten 88 ein Vorteil, wenn noch ein Teil der Wurstkette 88 auf dem Laufband 40 liegt und ein anderer Teil schon auf der Rutsche 49 aufliegt. Die Rutsche 49 prägt der Wurstkette keine Geschwindigkeit auf, so dass die Einleitung von Zugkräften in die Wurstkette 88 vermieden wird. Der Gefahr eines Absinkens der Stopfqualität oder eines Zerreißens wird dadurch entgegen gewirkt.

## Patentansprüche

1. Wurstverpackungsvorrichtung zum Befüllen von pastösem Füllgut in schlauchförmiges Hüllenmaterial mit einem Füllrohr (1), das an einer Füllzone (5) mündet und an seiner Außenseite eine Aufnahme für gerafftes schlauchförmiges Hüllenmaterial (80) aufweist, so dass zum Füllen einer Wurst (8) das einseitig verschlossene Hüllenmaterial (80) unter dem Druck des Füllguts (85) von dem Füllrohr (1) abgezogen wird und bei Erreichen einer bestimmten Größe mittels einer Verschlusseinrichtung (2) verschlossen wird, und mit einer ein Laufband (40) umfassenden Abfuhreinrichtung (4) für die so gefüllte Wurst (8),
**dadurch gekennzeichnet, dass**
das Laufband (40) mit einem drehzahlstellbaren Antrieb (43) versehen ist, der von einem Regelmodul (64) einer Steuereinheit (6) betätigt ist, und dass eine Wachstumsmesseinrichtung für die Wurst (8) vorgesehen ist, die an der Füllzone (5) angeordnete Geschwindigkeitsmessmittel (7), eine Auswerteeinheit (67) zur Bestimmung einer Wachstumsgeschwindigkeit der Wurst (8) und eine Synchronisiereinheit (62) aufweist, welche das Regelmodul (64) so ansteuert, dass ein Gleichlauf zwischen Geschwindigkeit des Laufbands (40) und der Wachstumsgeschwindigkeit erreicht ist.

2. Vorrichtung nach Anspruch 1,
**dadurch gekennzeichnet, dass**
die Geschwindigkeitsmessmittel (7) als Lichtschranken (71, 72) ausgebildet sind.

3. Vorrichtung nach Anspruch 1 oder 2,
**dadurch gekennzeichnet, dass**
die Lichtschranken in einen Zeilensensor (7') integriert sind.

4. Vorrichtung nach einem der vorhergehenden Ansprüche,
**dadurch gekennzeichnet, dass**
mindestens eine der Lichtschranken (71) in ihrem Abstand zur Mündung (10) des Füllrohrs (1) verstellbar angeordnet ist.

5. Vorrichtung nach Anspruch 4,
**dadurch gekennzeichnet, dass**
eine Servoeinrichtung (74) zum Verstellen der Lichtschranke (71) vorgesehen ist, die von der Steuereinheit (6) betätigt ist.

6. Vorrichtung nach einem der vorhergehenden Ansprüche,
**dadurch gekennzeichnet, dass**
die Lichtschranken als Doppelsensoren (71') ausgebildet sind, die zusätzlich das Kaliber der Wurst (8) erfassen.

7. Vorrichtung nach einem der vorhergehenden Ansprüche,
**dadurch gekennzeichnet, dass**
ein Wurstkettenmodul mit einem Freiraumdetektor (68) vorgesehen ist.

8. Vorrichtung nach einem der vorhergehenden Ansprüche,
**dadurch gekennzeichnet, dass**
die Abfuhreinrichtung (4) ein Förderband (48) umfasst, das im Abwurfbereich des Laufbands (40) beginnt und mit einer vom Laufband (40) unabhängigen Geschwindigkeit betrieben ist.

9. Vorrichtung nach einem der Ansprüche 1 bis 7,
**dadurch gekennzeichnet, dass**
die Abfuhreinrichtung (4) eine Förderrutsche (49) aufweist, die im Abwurfbereich des Laufbands (40) beginnt.

## Claims

1. A sausage packaging apparatus for filling paste-like filling material into tubular casing material with a filling tube (1) which opens at a filling zone (5) and on its outside has a receptacle for shirred tubular casing material (80) so that to fill a sausage (8) the casing material (80) sealed at one end is removed from the filling tube (1) under the pressure of the filling material (85) and upon reaching a given size is sealed by means of a sealing device (2), and with a delivery device (4) for the sausage (8) thus filled, which comprises a moving belt (40), **characterised in that** the moving belt (40) is provided with a drive means (43) whose speed of rotation is adjustable and which is actuated by a control module (64) of a control unit (6), and **in that** a growth-measuring device for the sausage (8) is provided, which has speed measuring means (7) arranged at the filling zone (5), an evaluating unit (67) for determining the growth rate of the sausage (8) and a synchronising unit (62) which activates the control module (64) so that synchronism is attained between the speed of the moving belt (40) and the growth rate.

2. An apparatus according to Claim 1, **characterised in that** the speed measuring means (7) are in the form of light barriers (71,72).

3. An apparatus according to Claim 1 or 2, **characterised in that** the light barriers are integrated into a line sensor (7').

4. An apparatus according to any one of the preceding Claims, **characterised in that** at least one of the light barriers (71) is arranged so as to be adjustable in its distance from the opening (10) of the filling tube (1).

5. An apparatus according to Claim 4, **characterised in that** a servo device (74) is provided for adjusting the light barrier (71), which is actuated by the control unit (6).

6. An apparatus according to any one of the preceding Claims, **characterised in that** the light barriers are in the form of double sensors (71') which additionally detect the calibre of the sausage (8).

7. An apparatus according to any one of the preceding Claims, **characterised in that** a sausage string module with a free-space detector (68) is provided.

8. An apparatus according to any one of the preceding Claims, **characterised in that** the delivery device (4) comprises a conveyor belt (48) which begins in the delivery zone of the moving belt (40) and which is operated at a speed independent of the moving belt (40).

9. An apparatus according to any one of Claims 1 to 7, **characterised in that** the delivery device (4) has a conveyor chute (49) which begins in the delivery zone of the moving belt (40).

## Revendications

1. Dispositif de conditionnement de saucisses destiné à remplir avec une matière pâteuse une enveloppe tubulaire, comportant un tube de remplissage (1), qui débouche dans une zone de remplissage (5) et qui comporte sur sa face extérieure une zone pour recevoir l'enveloppe tubulaire (80) serrée en plis, de telle sorte que pour le remplissage d'une saucisse (8), l'enveloppe (80) fermée à une extrémité est tirée sur le tube de remplissage (1) sous l'effet de la pression de la matière de remplissage (85) et lorsqu'elle atteint une dimension déterminée est fermée au moyen d'un dispositif de fermeture (2), et comportant un dispositif d'évacuation (4) comportant un tapis roulant (40) pour la saucisse (8) ainsi remplie, **caractérisé en ce que** le tapis roulant (40) est muni d'un système d'entraînement (43) à vitesse réglable, qui est actionné par un module de réglage (64) d'une unité de commande (6), et **en ce qu'**il est prévu un dispositif de mesure du développement de la saucisse (8), qui comporte des moyens de mesure de la vitesse (7), agencés au niveau de la zone de remplissage (5), une unité d'analyse (67) pour déterminer la vitesse de développement de la saucisse (8), et une unité de synchronisation (62), qui active le module de réglage (64) de telle sorte qu'un synchronisme est obtenu entre la vitesse du tapis roulant (40) et la vitesse de développement.

2. Dispositif selon la revendication 1, **caractérisé en ce que** les moyens de mesure de la vitesse (7) sont réalisés sous la forme de barrières photoélectriques (71, 72).

3. Dispositif selon la revendication 1 ou 2, **caractérisé en ce que** les barrières photoélectriques sont intégrées dans un capteur de lignes (7').

4. Dispositif selon l'une quelconque des revendications précédentes, **caractérisé en ce que** au moins une des barrières photoélectriques (71) est agencée de manière réglable en distance par rapport à la bouche (10) du tube de remplissage (1).

5. Dispositif selon la revendication 4, **caractérisé en ce que** il est prévu un servo-système (74) pour le réglage de la barrière photoélectrique (71), lequel est actionné par l'unité de commande (6).

6. Dispositif selon l'une quelconque des revendications précédentes, **caractérisé en ce que** les barrières photoélectriques sont réalisées sous forme de capteurs doubles (71'), qui détectent en plus le calibre de la saucisse (8).

7. Dispositif selon l'une quelconque des revendications précédentes, **caractérisé en ce que** il est prévu un module de chaînes de saucisses avec un détecteur d'espace libre (68).

8. Dispositif selon l'une quelconque des revendications précédentes, **caractérisé en ce que** le dispositif d'évacuation (4) comporte une bande transporteuse (48) qui commence dans la zone d'évacuation du tapis roulant (40) et qui peut fonctionner avec une vitesse indépendante de celle du tapis roulant (40).

9. Dispositif selon l'une quelconque des revendications 1 à 7, **caractérisé en ce que** le dispositif d'évacuation (4) comporte une goulotte de transport (49) qui commence dans la zone d'évacuation du tapis roulant (40).
